# EUROPÄISCHE PATENTANMELDUNG

(11) **EP 2 524 980 A1**
(43) Veröffentlichungstag der Anmeldung: **21.11.2012**
(21) Anmeldenummer: 11004131.6
(22) Anmeldetag: 18.05.2011
(51) Int. Cl.: D01D 5/06, D01F 2/00, D01F 9/17

(54) **Verfahren zur Herstellung ligninhaltiger Precursorfasern sowie Carbonfasern**

(71) Anmelder: Fraunhofer-Gesellschaft zur Förderung der angewandten Forschung e.V., 80686 München (DE)
(72) Erfinder: Lehmann, André, Dr. rer. nat., 14478 Potsdam (DE); Ebeling, Horst, Dr. rer. nat., 14727 Premnitz (DE); Fink, Hans-Peter, Prof. Dr. habil, 14513 Teltow (DE)
(74) Vertreter: Pfenning, Meinig & Partner GbR

(57) **Zusammenfassung**

Die Erfindung betrifft ein Verfahren zur Herstellung eines Precursors für die Herstellung von Kohlenstoff-und aktivierten Kohlenstofffasern nach dem Nass- oder Luftspaltspinnverfahren, bei dem eine Lösung von Lignin und einem faserbildenden Polymer in einem geeigneten Lösungsmittel durch die Löcher einer Spinndüse in ein Koagulationsbad extrudiert, der gebildete Faden verstreckt und nachbehandelt, bei erhöhter Temperatur getrocknet und dann aufgewickelt wird. Der ligninhaltige Faden ist ein kostengünstiges Ausgangsmaterial zur Herstellung von Kohlenstoff- und aktivierten Kohlenstofffasern.

## Beschreibung

Die Erfindung betrifft ein Verfahren zur Herstellung eines Precursors für die Herstellung von Kohlenstoff- und aktivierten Kohlenstofffasern nach dem Nass- oder Luftspaltspinnverfahren, bei dem eine Lösung von Lignin und einem faserbildenden Polymer in einem geeigneten Lösungsmittel durch die Löcher einer Spinndüse in ein Koagulationsbad extrudiert, der gebildete Faden verstreckt und nachbehandelt, bei erhöhter Temperatur getrocknet und dann aufgewickelt wird. Der ligninhaltige Faden ist ein kostengünstiges Ausgangsmaterial zur Herstellung von Kohlenstoff- und aktivierten Kohlenstofffasern.

Carbonfasern sind Hochleistungsverstärkungsfasern, die im Wesentlichen für Verbundmaterialien im Flugzeugbau, dem Hochleistungsfahrzeugbau (Formell, Hochleistungssegelschiffe etc.), für Sportgeräte und zunehmend für Windkraftanlagen eingesetzt werden. Gegenwärtig gibt es weltweit umfangreiche Anstrengungen, Carbonfasern mittlerer Qualität (bei verringertem Preisniveau) in Massenanwendungen des Automobilbaues zu bringen, wobei die inzwischen gesellschaftlich angestrebte Entwicklung von gewichtsreduzierten Elektrofahrzeugen eine wesentliche Triebkraft darstellt.

Carbonfasern werden durch die Hitzebehandlung oberhalb 1000 °C von organischen Precursorfasern hergestellt. Die ersten Carbonfasern wurden auf Basis von cellulosischen Precursoren entwickelt und als Glühfäden in Lampen verwendet. Heute sind Polyacrylnitril bzw. Copolymere des Polyacrylnitrils die dominierenden Polymeren für die Herstellung von Precursoren für Carbonfasern. Ergänzt wird die Palette der PAN basierten Carbonfasern durch Hochmodul-Carbonfaser aus Pech. Für PAN-basierte Carbonfasern lag die geschätzte Jahreskapazität 2010 bei ca. 77.000 t und für pechbasierte Carbonfaser bei 1830 t (technische Textilien 3/2010). Ein Überblick über die Herstellung, die Struktur, die mechanischen Eigenschaften sowie auch die Anwendung von PAN und pechbasierten Carbonfasern ist gegeben in: J. P. Donnet et al, Carbon fibers, third edition, Marcel Dekker, Inc. New York, Basel, Hong Kong.

Polyacrylnitril und Pech sind Produkte der petrochemischen Industrie und unterliegen damit der für diesen Industriezweig typischen Kostensteigerung. Daraus resultierte in den letzten Jahren ein Entwicklungstrend, Precursoren zu entwickeln, die rohstoffseitig nicht an den Ölpreis gekoppelt sind. Forciert wurde dieser Trend durch die Forderung nach Carbonfasern im mittleren Qualitätssegment und damit auch im mittleren Preissegment für Massenanwendungen, wie sie im Automobilbau gesehen werden.

In den Fokus traten dabei auch die Biopolymeren. Auf die Cellulose (Rayon) als Rohstoff für die erste Carbonfaser wurde bereits hingewiesen. Auch Lyocell-Fasern wurden als Precursor untersucht (S. Peng et al., J. Appl. Polymer Sci. 90 (2003) 1941-1947). Es wurde gezeigt, dass die Lyocell-basierten Carbonfasern eine etwas höhere Festigkeit haben als die unter vergleichbaren Bedingungen hergestellten Rayonbasierten Fasern. 1 GPa für die Festigkeit und ca. 100 GPa für den E-Modul sind jedoch auf einem sehr niedrigen Niveau für Carbonfasern. Neben der Cellulose man-made Faser wurden auch Cellulose-Naturfasern als Precursor für Carbonfaser getestet. M. Zhang et. al. (Die Angewandte makromolekulare Chemie 222 (1994) 147-163) benutzten Sisalfaser als Precursor für die Carbonfaserherstellung. Mit einer Festigkeit von 0,82 GPa und einem E-Modul von 25 GPa liegen die daraus hergestellten Carbonfasern auf einem sehr niedrigen Niveau.

Ein anderes Biopolymer, das zunehmend an Bedeutung in der Precursor-Entwicklung erlangt, ist Lignin. Lignin ist ein polyaromatisches Polyol, welches Bestandteil des Holzes ist und in großen Mengen als Nebenprodukt der Zellstoffherstellung anfällt. Der Kohlenstoffanteil liegt bei ca. 60 - 65%. Die chemische Struktur des Lignins wird durch die im Zellstoffprozess verwendete Holzart sowie das angewendete Verfahren der Zellstoffkochung bestimmt. Die Hauptmengen des anfallenden Lignins werden der energetischen Nutzung zugeführt. Mit dem Lignin steht ein äußerst kostengünstiger Rohstoff in sehr großen Mengen zur Verfügung, der in unmodifizierter Form praktisch nicht faserbildend ist. Eine Zielstellung war die Entwicklung von schmelzgesponnenen ligninhaltigen Precursoren. J.F. Kadla et al. (Carbon 40 (2002) 2913-2920) beschreiben die Herstellung von Ligninfaser durch Schmelzspinnen eines kommerziell verfügbaren Kraft-Lignins sowie auch das Schmelzspinnen einer Mischung von Lignin mit geringen Anteilen bis 5% von Polyethylenoxid (PEO). Die Verarbeitung von reinem Lignin verlangt eine thermische Vorbehandlung, was die Rohmaterialkosten erhöht und in Mischungen sind nur geringe Anteile an PEO möglich, da es bei größeren Mengen an PEO zu Verklebungen im Stabilisierungsprozess kommt. Die Carbonfasern aus den schmelzgesponnenen ligninhaltigen Precursoren hatten Festigkeiten von ca. 0.4 GPa und Module im Bereich 40 - 50 GPa und erfüllen damit noch nicht die vom Automobilbau angestrebten mechanischen Kennwerte Festigkeit ca. 1.7 GPa und Modul ca. 170 GPa.

Kubo et al. (Carbon 36 (1998) 1119-1124) beschreiben einen Prozess zum Schmelzspinnen von Lignin, bei dem in einem Vorbehandlungsschritt die nicht schmelzenden hochmolekularen Bestandteile aus dem Lignin entfernt werden. In einer weiteren Publikation beschreiben K. Sudo et al. (J. Appl. Polymer Sci, 44(1992)127-134) die Vorbehandlung des Lignins mit organischen Lösungsmitteln mit anschließendem Schmelzspinnen der chloroformlöslichen Fraktion. Die daraus hergestellten Carbonfasern verkörperten nur ein niedriges Festigkeitsniveau.

US 7,678,358 beansprucht die Acetylierung des Lignins als Vorstufe des Lignin-Schmelzspinnens, ohne aber Aussagen zu den Eigenschaften der auf diese Weise hergestellten Carbonfasern zu machen. Der Stand der Technik zeigt, dass es prinzipiell möglich ist, schmelzgesponnene ligninhaltige Precursoren für Carbonfasern herzustellen. Es zeigt sich aber auch, dass das Eigenschaftsniveau PAN bzw. Pech basierter Carbonfaser nicht erreicht wird. Offen bleibt die Frage, ob die notwendige Ligninmodifizierung, um dieses für das Schmelzspinnen geeignet zu machen, den Kostenvorteil des kostengünstigen Rohmaterials Lignin nicht wieder kompensiert.

Der Erfindung liegt die Aufgabe zu Grunde, ein kostengünstiges Verfahren zur Herstellung eines ligninhaltigen Precursors auf Basis eines Lösungsspinnverfahrens für die Herstellung von Carbon- und aktivierten Carbonfasern zu entwickeln.

Weiterhin ist es Aufgabe der vorliegenden Erfindung, eine entsprechende ligninhaltige Precursorfaser anzugeben. Zudem betrifft die vorliegende Erfindung die Weiterverarbeitung der Precursorfasern zu Carbonfasern sowie entsprechend hergestellte aktivierte Carbonfasern.

Diese Aufgabe wird hinsichtlich des Verfahrens zur Herstellung einer ligninhaltigen Precursorfaser mit den Merkmalen des Patentanspruchs 1 gelöst. Patentanspruch 14 betrifft eine entsprechend hergestellte Precursorfaser. Zudem wird mit Patentanspruch 16 ein Verfahren zur Herstellung einer Carbonfaser angegeben, mit Patentanspruch 18 wird eine entsprechend hergestellte Carbonfaser bereitgestellt.

Beim erfindungsgemäßen Verfahren zur Herstellung einer ligninhaltigen Precursorfaser für die Herstellung von Kohlenstofffasern und/oder aktivierten Kohlenstofffasern wird eine Lösung, enthaltend mindestens eine Sorte eines Lignins sowie mindestens einem faserbildenden Polymer in mindestens einem Lösungsmittel durch Extrusion der Lösung durch eine Spinndüse in ein Koagulationsbad eingebracht, wobei die ligninhaltige Precursorfaser ausfällt.

Besonders vorteilhaft beim erfindungsgemäßen Verfahren ist die vorzugsweise niedrige Verarbeitungstemperatur der einmal hergestellten Lösung bei deren Extrusion in das Koagulationsbad, wobei die maximale Obergrenze dieser Temperatur durch die Natur des Koagulationsbades (Siedepunkt) vorgegeben ist. In der Regel liegt somit die Temperatur des Koagulationsbades unterhalb von 100 °C. Dadurch wird eine äußerst schonende Verarbeitung der Ligninfasern bereitgestellt, die überraschenderweise dazu führt, dass die aus diesen Precursorfasern hergestellten Carbonfasern eine deutlich erhöhte Reißfestigkeit aufweisen.

Unter dem Begriff "Lösung" wird erfindungsgemäß verstanden, dass sämtliche Bestandteile der Lösung, d.h. sowohl das Lignin als auch das faserbildende Polymer vollständig vom Lösungsmittel solvatisiert sind. Ebenso umfasst dieser Begriff jedoch auch die Möglichkeit, dass die Ligninfasern und/oder das faserbildende Polymer zum Teil ungelöst hierin vorliegen.

Eine bevorzugte Ausführungsform des Verfahrens sieht vor, dass die in Schritt a) eingesetzte Lösung durch Rühren oder Kneten der mindestens einen Sorte eines Lignins sowie des mindestens einen faserbildenden Polymers in dem mindestens einem Lösungsmittel hergestellt wird, bevorzugt bei Temperaturen von 60 °C oder mehr, besonders bevorzugt von 80 °C oder mehr.

Weiter ist es vorteilhaft, wenn die Lösung vor Einbringen in das Koagulationsbad filtriert wird, wobei ggf. enthaltene unlösliche Bestandteile abgetrennt werden können.

In einer besonders bevorzugten Ausführungsform beträgt der Spinnlochdurchmessern der Spinndüse von 50 bis 600 µm, bevorzugt 100 bis 500 µm.

Bevorzugte Methoden zum Einbringen der Lösung in das Fällbad bzw. Koagulationsbad erfolgen dabei im Nassspinnverfahren oder im Luftspaltspinnverfahren, wobei im Falle eines Luftspaltspinnverfahrens der Luftspalt bevorzugt mindestens 10 mm, weiter bevorzugt mindestens 20 mm und höchstens 500 mm beträgt.

Weitere vorteilhafte Aspekte des erfindungsgemäßen Verfahrens sehen vor, dass die ligninhaltige Faser nach Schritt b)
a) verstreckt wird, bevorzugt auf mindestens das 1,1-fache, weiter bevorzugt auf das 1,1 bis 12-fache, besonders bevorzugt auf mindestens das 1,5-fache, insbesondere bevorzugt auf das mindestens 2-fache ihrer Länge verstreckt wird, insbesondere bei einer Temperatur von mindestens 60 °C, bevorzugt mindestens 80 °C, weiter bevorzugt mindestens 90 °C, besonders bevorzugt von mindestens 100 °C, wobei das Verstrecken bevorzugt im Fällbad, in Luft oder in Wasserdampf durchgeführt wird,
b) gewaschen, bevorzugt mit entmineralisiertem Wasser gewaschen wird,
c) mit Textilhilfsmitteln zur Verbesserung des Fadenschlusses und zur Vermeidung von elektrostatischen Aufladungen nachbehandelt wird,
d) getrocknet wird, insbesondere durch Aufwickeln oder Umwickeln der Faser auf bzw. um beheizte Walzen und/oder durch Durchströmtrocknung bei einer Temperatur von mindestens 80 °C, bevorzugt mindestens 100 °C und/oder
e) aufgewickelt wird.

Weiterhin ist es vorteilhaft möglich, dass die Faser vor dem Trocknen, nach dem Trocken oder vor und nach dem Trocknen mit einem Spinnöl ausgestattet wird.

Bevorzugte Konzentrationen der mindestens einen Sorte des Lignins betragen dabei von 1 bis 40 Gew.-%, bevorzugt von 2 bis 30 Gew.-%, besonders bevorzugt von 3 bis 20 Gew.-%, bezogen auf die gesamte Lösung.

Vorteilhafte Konzentrationen des mindestens einen faserbildenden Polymers liegen dabei, bezogen auf die gesamte Lösung, von 1 bis 50 Gew.-%, bevorzugt von 5 bis 40 Gew.-%, besonders bevorzugt von 7 bis 30 Gew.-%, ebenso bezogen auf die gesamte Lösung.

In einer besonders bevorzugten Ausführungsform enthält das Koagulationsbad Wasser oder eine Mischung aus Wasser und einer organischen Flüssigkeit, wie z.B. bei Raumtemperatur flüssige aliphatische Amide, insbesondere Dimethylformamid (DMF) oder Dimethylacetamid (DMAc); tertiäre Aminoxide, insbesondere N-Methylmorpholin-N-oxid; ionischen Flüssigkeiten, bevorzugt ionischen Flüssigkeiten ausgewählt aus der Gruppe bestehend aus Imidazoliumverbindungen, Pyridiniumverbindungen oder Tetraalkylammoniumverbindungen, besonders bevorzugt 1-Butyl-3-methylimidazoliumchlorid, 1-Butyl-3-methylimidazoliumacetat, 1-Ethyl-3-methylimidazoliumacetat und/oder Mischungen hieraus.

Ein vorteilhafter pH-Wert des Koagulationsbades liegt dabei zwischen 1 und 7, bevorzugt zwischen 2 und 5.

Das Lösungsmittel für die Spinnlösung, d.h. die Lösung, die das Lignin sowie mindestens ein faserbildendes Polymer enthält, ist dabei bevorzugt ausgewählt aus der Gruppe bestehend aus bei Raumtemperatur flüssigen aliphatischen Amiden, insbesondere Dimethylformamid (DMF) oder Dimethylacetamid (DMAc); tertiäre Aminoxide, insbesondere N-Methylmorpholin-N-oxid; ionischen Flüssigkeiten, bevorzugt ionischen Flüssigkeiten ausgewählt aus der Gruppe bestehend aus Imidazoliumverbindungen, Pyridiniumverbindungen oder Tetraalkylammoniumverbindungen, besonders bevorzugt 1-Butyl-3-methylimidazoliumchlorid, 1-Butyl-3-methylimidazoliumacetat, 1-Ethyl-3-methylimidazoliumacetat; und/oder Mischungen hieraus.

Bevorzugte faserbildende Polymere sind ausgewählt aus der Gruppe bestehend aus Cellulose und/oder Cellulosederivaten, insbesondere Cellulosecarbamat, Celluloseallophanat, Hemicellulose; Polyacrylnitril, Polyacrylnitril-Copolymeren, insbesondere Polyacrylnitril-Copolymeren mit einem Polyacrylnitrilgehalt von 85 Gew.-% oder mehr, bevorzugt 90 Gew.-% oder mehr und/oder Mischungen oder Blends hieraus.

Ferner ist beim erfindungsgemäßen Verfahren vorteilhaft, wenn die mindestens eine Sorte Lignin aus Zellstoffverfahren resultiert und insbesondere ausgewählt ist aus der Gruppe bestehend aus Alkalilignin, Kraftlignin, Lignosulfonat, Thiolignin, Organolsolvlignin, ASAM-Lignin, Ligninen aus Aufschlussverfahren mittels ionischen Flüssigkeiten oder Enzymen sowie aus Lignoboost-Aufreinigungsverfahren und/oder Kombinationen oder Mischungen hieraus.

Erfindungsgemäß wird ebenso eine Precursorfaser zur Herstellung von Carbonfasern angegeben. Die erfindungsgemäße Precursorfaser zeichnet sich durch
a) einen Gehalt an mindestens einer Sorte eines Lignins von mindestens 10 Gew.-%, bevorzugt 20 bis 60 Gew.-%,
b) einen Gehalt an mindestens einer Sorte eines faserbildenden Polymers von maximal 90 Gew.-%, bevorzugt 40 bis 80 Gew.-%, und
c) gegebenenfalls eine Festigkeit von mindestens 10 cN/tex, bevorzugt mindestens 20 cN/tex, und/oder
d) gegebenenfalls einen E-Modul von mindestens 1000 cN/tex, bevorzugt mindestens 1300 cN/tex
aus.

Besonders vorteilhaft lässt sich die erfindungsgemäße Precursorfaser nach einem im voranstehenden beschriebenen Verfahren herstellen.

Weiter wird gemäß der vorliegenden Erfindung ein Verfahren zur Herstellung einer Carbonfaser angegeben, bei dem eine Precursorfaser nach einem der beiden vorhergehenden Ansprüche bei Temperaturen zwischen 100 und 400 °C stabilisiert und oberhalb 800 °C unter inerten Bedingungen carbonisiert wird.

In einer bevorzugten Ausführungsform wird die Carbonfaser nach der Carbonisierung mit Wasserdampf bei Temperaturen > 200°C, bevorzugt > 300 °C beaufschlagt.

Zudem stellt die vorliegende Erfindung eine Carbonfaser bereit, die gemäß dem zuvor beschriebenen Verfahren zur Herstellung der Carbonfaser hergestellt werden kann.

Die vorliegende Erfindung wird anhand der nachfolgenden Ausführungen sowie Beispielen näher erläutert, ohne die Erfindung auf die dargestellten Parameter zu beschränken.

Das Lignin wird bevorzugt mit dem faden- oder faserbildenden Polymer gemischt und dann durch Rühren oder durch einen Knetprozess bei erhöhter Temperatur in einem geeigneten Lösungsmittel gelöst. Die resultierende Lösung wird ggf. filtriert und dann vorteilhafterweise durch Nass- oder Luftspaltspinnen zu Filamenten verformt, die unter unterschiedlichen Bedingungen verstreckt, gewaschen, ausgerüstet, getrocknet und dann als Filament aufgewickelt werden können.

Die verschiedenen Lignine wie Alkalilignin, Lignosulfonat, Thiolignin, Organosolvlignin bzw. Ligninarten aus, dem Fachmann bekannten, alternativen Holzaufschlussverfahren, wie sie bei der Zellstoffherstellung anfallen, oder auch Mischungen dieser können verwendet werden. Die Lignine werden intensiv mit Wasser oder ggfs. auch mit verdünnten Säuren bis zu einem Aschegehalt kleiner 0,5% gewaschen.

Als faserbildende Polymere werden insbesondere Cellulose oder auch Cellulosederivate wie Cellulosecarbamat und Celluloseallophanat, Polyacrylnitril und Polyacrylnitrilcopolymere mit einem Acrylnitrilgehalt größer 85%, bevorzugt größer 90% verwendet.

Als Lösungsmittel werden z.B. aliphatische Amide wie DMF oder DMAc, DMSO, tertiäre Aminoxide bevorzugt N-Methylmorpholin-N-oxid oder eine ionische Flüssigkeit ausgewählt aus der Gruppe bestehend aus Imidazoliumverbindungen, Pyridiniumverbindungen, Tetraalkylammoniumverbindungen und Gemische davon eingesetzt.

Die Spinnlösung wird bevorzugt unter Rühren oder durch Kneten bei einer Temperatur oberhalb 60 °C, bevorzugt oberhalb 80°C hergestellt. Die Polymerkonzentration wird z.B. auf größer 8%, bevorzugt größer 10% eingestellt. Die entstehende viskose Lösung kann unter Verwendung üblicher Filtrationsvorrichtungen filtriert und als homogene partikelfreie Lösung der Zwischenlagerung vor dem Spinnprozess zugeführt werden.

Die Verformung der Spinnlösung zu Fasern oder Filamenten erfolgt in einer besonders bevorzugten Ausführungsform nach dem Nassspinn- oder Luftspaltspinnverfahren. Beim Nassspinnverfahren wird die Spinnlösung durch die Löcher einer Spinndüse gedrückt, wobei Spinndüsen mit Lochdurchmessern von 50 bis 500 µm zur Anwendung kommen. Der extrudierte Faden wird im Koagulationsbad, das aus Wasser oder aus einem Gemisch aus dem Polymerlösungsmittel und einem Nichtlöser besteht, verfestigt. Der Nichtlöser kann bevorzugt Wasser oder ein aliphatischer Alkohol mit einer Kettenlänge bis C 8 sein. Bei Anwendung des Luftspaltspinnens wird die viskose ligninhaltige Spinnlösung durch die Löcher einer Spinndüse gedrückt und die extrudierten Fäden im Luftspalt verstreckt. Der bevorzugte Düsenlochdurchmesser beträgt bevorzugt größer 100 µm und sollte 600 µm nicht überschreiten. Die Luftspaltlänge ist mindestens 10 mm. Der luftverstreckte Faden wird dann vergleichbar zum Nassspinnen koaguliert.

Der Faden wird in Wasser und/oder einem Gemisch aus Wasser und dem Lösungsmittel bei einer Temperatur größer 80 °C, bevorzugt größer 90 °C und in Heißluft und/oder Wasserdampf größer 90 °C, bevorzugt größer 100 °C bis zu einem Mehrfachen seiner Länge, jedoch um mindestens das 1,1-fache verstreckt. Die Verstreckung kann vor oder auch nach dem Waschprozess erfolgen.

Der verstreckte und gewaschene Faden wird vor der Trocknung oder nach der Trocknung oder vor und nach der Trocknung mit einem antistatisch wirkenden Spinnöl ausgerüstet. Die Trocknung erfolgt auf beheizten Walzen oder auch durch Durchströmtrocknung bei Temperaturen größer 80 °C, bevorzugt größer 100 °C.

Die so hergestellte Faser enthält mindestens 10 % Lignin, bevorzugt > 20 % Lignin und ein oder mehrere faserbildende Polymere wie Cellulose und/oder Cellulosederivate wie Cellulosecarbamat und/oder Celluloseallophanat oder auch Polyacrylnitril und/oder Polyacrylnitrilcopolymerisate. Die erfindungsgemäß hergestellten Fasern besitzen eine Reißfestigkeit von mindestens 10 cN/tex und einen Modul größer 500 cN/tex und können nach den bekannten Verfahren zur Stabilisierung und Carbonisierung in Carbonfasern sowie durch eine anschließende Wasserdampfbehandlung in aktivierte Carbonfasern mit hoher spezifischer Oberfläche umgewandelt werden.

### Beispiel 1

60 g eines zu 12 % Hemicellulose enthaltenen Zellstoffes (DP_{cuox}=490) werden mit 29 g lufttrockenem Organocell-Lignin in 500 g 1-Butyl-3-methylimidazoliumachlorid gemischt und in einem Horizontalkneter bei einer Temperatur von 90 °C in 3 h gelöst. Die resultierende schwarze, homogene Lösung ist frei von Faserresten und weist eine Nullscherviskosität, gemessen bei 80 °C, von 578 Pas auf.

Die Lösung wurde mit Hilfe eines Extruders durch eine 40-Loch-Spinndüse gepresst (Lochdurchmesser 200 µm), mit einem Verzugsverhältnis von 14 im Luftspalt verstreckt und die Filamente im essigsaurem Koagulationsbad (pH=2,5) gefällt. Die Wäsche der Filamente erfolgte mit destilliertem Wasser, die Trocknung erfolgte an der Luft. Die Filamente hatten eine Festigkeit von 25 cN/tex, eine Dehnung von 7,6 % sowie ein E-Modul von 1320 cN/tex. Der Ligningehalt betrug 20,3 %.

### Beispiel 2

75 g eines lufttrockenen Chemiezellstoffes (DPcuox=560) werden mit 48 g lufttrockenem KraftLignin in 500 g 1-Ethyl-3-methylimidazoliumacetat gemischt und in einem Horizontalkneter bei einer Temperatur von 90 °C innerhalb 3 h gelöst. Die resultierende schwarze, homogene Lösung ist frei von Faserresten und weist eine Nullscherviskosität, gemessen bei 100 °C, von 374 Pas auf. Die Lösung wurde mit Hilfe eines Extruders durch eine 40-Loch-Spinndüse gepresst (Lochdurchmesser 200 µm), mit einem Verzugsverhältnis von 18 im Luftspalt verstreckt und die Filamente im wässrigen Koagulationsbad gefällt. Die Wäsche der Filamente erfolgte mit destilliertem Wasser, die Trocknung erfolgte an der Luft. Die Filamente hatten eine Festigkeit von 28 cN/tex, eine Dehnung von 9,6% sowie ein E-Modul von 1560 cN/tex. Der Ligningehalt betrug 36,4%.

### Beispiel 3

75 g eines lufttrockenen Chemiezellstoffes (DPcuox=560) werden mit 48 g lufttrockenem Organosolv-Lignin sowie 5,8 g Poylacrylnitril in 500 g 1-Ethyl-3-methylimidazoliumacetat gemischt und in einem Horizontalkneter bei einer Temperatur von 90 °C in 3h gelöst. Die resultierende schwarze, homogene Lösung ist frei von Faserresten und weist eine Nullscherviskosität, gemessen bei 100 °C, von 342 Pas auf. Die Lösung wurde mit Hilfe eines Extruders durch eine 80-Loch-Spinndüse gepresst (Lochdurchmesser 100 µm), mit einem Verzugsverhältnis von 25 im Luftspalt verstreckt und die Filamente im wässrigen Koagulationsbad gefällt. Die Wäsche der Filamente erfolgte mit destilliertem Wasser, die Trocknung erfolgte an der Luft. Die Filamente hatten eine Festigkeit von 35 cN/tex, eine Dehnung von 5,3 % sowie ein E-Modul von 2135 cN/tex. Der Ligningehalt betrug 47,3%.

### Beispiel 4

30 g Cellulosecarbamat (DP_{cuox}=258, DS=0.4) werden mit 10 g lufttrockenem Organosolv-Lignin und 70g 1-Butyl-3-methylimidazoliumacetat gemischt und in einem Horizontalkneter bei einer Temperatur von 110 °C in 2 h gelöst. Die resultierende schwarze, homogene Lösung ist frei von Faserresten und weist eine Nullscherviskosität, gemessen bei 100°C, von 1215 Pas auf. Die Lösung wurde mit Hilfe eines Extruders durch eine 12-Loch-Spinndüse gepresst (Lochdurchmesser 150 µm), mit einem Verzugsverhältnis von 30 im Luftspalt verstreckt und die ligninhaltige Cellulosecarbamatfaser im wässrigen Koagulationsbad mit 15% 1-Butyl-3-methylimidazoliumacetat gefällt. Die Wäsche der Filamente erfolgte mit destilliertem Wasser, die Trocknung erfolgte an der Luft. Die Filamente hatten eine Festigkeit von 45 cN/tex, eine Dehnung von 6,4 % sowie ein E-Modul von 2346 cN/tex. Der Ligningehalt betrug 18,3%.

### Beispiel 5

447 g eines lufttrockenen Chemiezellstoffes (DP_{cuox}=560) werden mit 276 g lufttrockenem KraftLignin sowie 2,1 g Propylgallat in 5,2 kg 52%-igem N-Methylmorpholin-N-oxidhydrat gemischt und in einem Horizontalkneter bei einer Temperatur von 90 °C unter destillativer Wasserabtrennung innerhalb 3 h gelöst. Die resultierende schwarze, homogene Lösung ist frei von Faserresten und weist eine Nullscherviskosität, gemessen bei 90 °C, von 642 Pas auf. Die Lösung wurde mit Hilfe eines Extruders durch eine 40-Loch-Spinndüse gepresst (Lochdurchmesser 200pm), mit einem Verzugsverhältnis von 20 im Luftspalt verstreckt und die Filamente im wässrigen Koagulationsbad gefällt. Die Wäsche der Filamente erfolgte mit destilliertem Wasser, die Trocknung erfolgte an der Luft. Die Filamente hatten eine Festigkeit von 42 cN/tex, eine Dehnung von 5,4 % sowie ein E-Modul von 2164 cN/tex. Der Ligningehalt betrug 52,4%.

### Beispiel 6

75 g Chemiezellstoff, 75 g Kraftlignin und 10 g Polyacrylnitril-Copolymerisat werden mit 840 g 1-Butyl-3-methylimidazoliumchlorid gemischt, anschlie-βend unter Kneten in 4 Stunden bei 110 °C gelöst und durch einen Nassspinnprozess unter Verwendung eines Koagulationsbades mit 15% 1-Butyl-3-methylimidazoliumchlorid und 85 % Wasser zu Fasern verformt, die Fasern auf das 1,8-fache verstreckt, mit Spinnöl ausgerüstet und bei 105 °C mittels beheizter Walzen getrocknet. Die Filamente hatten eine Festigkeit von 32 cN/tex, eine Dehnung von 6,4 % sowie ein E-Modul von 1564 cN/tex. Der Ligningehalt betrug 45,8%.

## Patentansprüche

1. Verfahren zur Herstellung einer ligninhaltigen Precursorfaser für die Herstellung von Kohlenstofffasern und/oder aktivierten Kohlenstofffasern, bei dem
a) eine Lösung, enthaltend mindestens eine Sorte eines Lignins sowie mindestens einem faserbildenden Polymer in mindestens einem Lösungsmittel
b) durch Extrusion der Lösung durch eine Spinndüse in ein Koagulationsbad eingebracht wird, wobei die ligninhaltige Precursorfaser ausfällt.

2. Verfahren nach Anspruch 1, **dadurch gekennzeichnet, dass** die in Schritt a) eingesetzte Lösung durch Rühren oder Kneten der mindestens einen Sorte eines Lignins sowie des mindestens einen faserbildenden Polymers in dem mindestens einem Lösungsmittel hergestellt wird, bevorzugt bei Temperaturen von 60 °C oder mehr, besonders bevorzugt von 80 °C oder mehr.

3. Verfahren nach einem der vorhergehenden Ansprüche, **dadurch gekennzeichnet, dass** die Lösung vor Einbringen in das Koagulationsbad filtriert wird.

4. Verfahren nach einem der vorhergehenden Ansprüche, **dadurch gekennzeichnet, dass** der Spinnlochdurchmessern der Spinndüse von 50 bis 600 µm, bevorzugt 100 bis 500 µm, beträgt.

5. Verfahren nach vorhergehendem Anspruch, **dadurch gekennzeichnet, dass** das Einbringen im Nassspinnverfahren oder im Luftspaltspinnverfahren erfolgt, wobei im Falles eines Luftspaltspinnverfahrens der Luftspalt bevorzugt mindestens 10 mm, bevorzugt mindestens 20 mm und höchstens 500 mm beträgt.

6. Verfahren nach einem der vorhergehenden Ansprüche, **dadurch gekennzeichnet, dass** die ligninhaltige Faser nach Schritt b)
a) verstreckt wird, bevorzugt auf mindestens das 1,1-fache, weiter bevorzugt auf das 1,1 bis 12-fache, besonders bevorzugt auf mindestens das 1,5-fache, insbesondere bevorzugt auf das mindestens 2-fache ihrer Länge verstreckt wird, insbesondere bei einer Temperatur von mindestens 60 °C, bevorzugt mindestens 80 °C, weiter bevorzugt mindestens 90 °C, besonders bevorzugt von mindestens 100 °C, wobei das Verstrecken bevorzugt im Fällbad, in Luft oder in Wasserdampf durchgeführt wird,
b) gewaschen, bevorzugt mit entmineralisiertem Wasser gewaschen wird,
c) mit Textilhilfsmitteln zur Verbesserung des Fadenschlusses und zur Vermeidung von elektrostatischen Aufladungen nachbehandelt wird,
d) getrocknet wird, insbesondere durch Aufwickeln oder Umwickeln der Faser auf bzw. um beheizte Walzen und/oder durch Durchströmtrocknung bei einer Temperatur von mindestens 80 °C, bevorzugt mindestens 100 °C und/oder
e) aufgewickelt wird.

7. Verfahren nach vorhergehendem Anspruch, **dadurch gekennzeichnet, dass** die Faser vor dem Trocknen, nach dem Trocken oder vor und nach dem Trocknen mit einem Spinnöl ausgestattet wird.

8. Verfahren nach einem der vorhergehenden Ansprüche, **dadurch gekennzeichnet, dass**, jeweils bezogen auf die gesamte Lösung, die Konzentration
a) der mindestens einen Sorte eines Lignins von 1 bis 40 Gew.-%, bevorzugt von 2 bis 30 Gew.-%, besonders bevorzugt von 3 bis 20 Gew.-%, und/oder
b) des mindestens einen faserbildenden Polymers von 1 bis 50 Gew.-%, bevorzugt von 5 bis 40 Gew.-%, besonders bevorzugt von 7 bis 30 Gew.-%,
beträgt.

9. Verfahren nach einem der vorhergehenden Ansprüche, **dadurch gekennzeichnet, dass** das Koagulationsbad Wasser oder eine Mischung aus Wasser und einer organischen Flüssigkeit, wie bei Raumtemperatur flüssige aliphatische Amide, insbesondere Dimethylformamid (DMF) oder Dimethylacetamid (DMAc); tertiäre Aminoxide, insbesondere N-Methylmorpholin-N-oxid; ionischen Flüssigkeiten, bevorzugt ionischen Flüssigkeiten ausgewählt aus der Gruppe bestehend aus Imidazoliumverbindungen, Pyridiniumverbindungen oder Tetraalkylammoniumverbindungen, besonders bevorzugt 1-Butyl-3-methylimidazoliumchlorid, 1-Butyl-3-methylimidazoliumacetat, 1-Ethyl-3-methylimidazoliumacetat, enthält.

10. Verfahren nach vorhergehendem Anspruch, **dadurch gekennzeichnet, dass** der pH-Wert des Koagulationsbades zwischen 1 und 7, bevorzugt zwischen 2 und 5 beträgt.

11. Verfahren nach einem der vorhergehenden Ansprüche, **dadurch gekennzeichnet, dass** das mindestens eine Lösungsmittel ausgewählt ist aus der Gruppe bestehend aus bei Raumtemperatur flüssigen aliphatischen Amiden, insbesondere Dimethylformamid (DMF) oder Dimethylacetamid (DMAc); tertiäre Aminoxide, insbesondere N-Methylmorpholin-N-oxid; ionischen Flüssigkeiten, bevorzugt ionischen Flüssigkeiten ausgewählt aus der Gruppe bestehend aus Imidazoliumverbindungen, Pyridiniumverbindungen oder Tetraalkylammoniumverbindungen, besonders bevorzugt 1-Butyl-3-methylimidazoliumchlorid, 1-Butyl-3-methylimidazoliumacetat, 1-Ethyl-3-methylimidazoliumacetat; und/oder Mischungen hieraus.

12. Verfahren nach einem der vorhergehenden Ansprüche, **dadurch gekennzeichnet, dass** die faserbildenden Polymere ausgewählt sind aus der Gruppe bestehend aus Cellulose und/oder Cellulosederivaten, insbesondere Cellulosecarbamat, Celluloseallophanat, Hemicellulose; Polyacrylnitril, Polyacrylnitril-Copolymeren, insbesondere Polyacrylnitril-Copolymeren mit einem Polyacrylnitrilgehalt von 85 Gew.-% oder mehr, bevorzugt 90 Gew.-% oder mehr und/oder Mischungen oder Blends hieraus.

13. Verfahren nach einem der vorhergehenden Ansprüche, **dadurch gekennzeichnet, dass** die mindestens eine Sorte Lignin aus Zellstoffverfahren resultiert und insbesondere ausgewählt ist aus der Gruppe bestehend aus Alkalilignin, Kraftlignin, Lignosulfonat, Thiolignin, Organolsolvlignin, ASAM-Lignin, Ligninen aus Aufschlussverfahren mittels ionischen Flüssigkeiten oder Enzymen sowie aus Lignoboost-Aufreinigungsverfahren und/oder Kombinationen oder Mischungen hieraus.

14. Precursorfaser zur Herstellung von Carbonfasern, **gekennzeichnet durch**
a) einen Gehalt an mindestens einer Sorte eines Lignins von mindestens 10 Gew.-%, bevorzugt 20 bis 60 Gew.-%,
b) einen Gehalt an mindestens einer Sorte eines faserbildenden Polymers von maximal 90 Gew.-%, bevorzugt 40 bis 80 Gew.-%, und
c) gegebenenfalls eine Festigkeit von mindestens 10 cN/tex, bevorzugt mindestens 20 cN/tex, und/oder
d) gegebenenfalls einen E-Modul von mindestens 1000 cN/tex, bevorzugt mindestens 1300 cN/tex.

15. Precursorfaser, hergestellt nach einem Verfahren nach einem der Ansprüche 1 bis 13.

16. Verfahren zur Herstellung einer Carbonfaser, bei dem eine Precursorfaser nach einem der beiden vorhergehenden Ansprüche bei Temperaturen zwischen 100 und 400 °C stabilisiert und oberhalb 800 °C unter inerten Bedingungen carbonisiert wird.

17. Verfahren nach vorhergehendem Anspruch, **dadurch gekennzeichnet, dass** die Carbonfaser nach der Carbonisierung mit Wasserdampf bei Temperaturen > 200°C, bevorzugt > 300 °C beaufschlagt wird.

18. Carbonfaser, herstellbar nach einem Verfahren nach einem der beiden vorhergehenden Ansprüche.
